# FASCICULE DE BREVET EUROPEEN

(11) **EP 3 026 348 B1**
(45) Date de publication et mention de la délivrance du brevet: **12.06.2019**
(21) Numéro de dépôt: 15196187.7
(22) Date de dépôt: 25.11.2015
(51) Int. Cl.: F24C 3/02, F24C 3/08

(54) **APPAREIL DE CUISSON À GAZ, NOTAMMENT UN FOUR À GAZ**
GERÄT ZUM KOCHEN MIT GAS, INSBESONDERE GASHERD
GAS COOKING APPLIANCE, ESPECIALLY A GAS OVEN

(30) Priorité: 27.11.2014 FR 1461566
(43) Date de publication de la demande: 01.06.2016
(73) Titulaire: LA CORNUE, 95310 Saint Ouen l'Aumone (FR)
(72) Inventeur: CECCHIN, Thomas, 75010 PARIS (FR); MENEGAZZI, Eric, 60240 LIERVILLE (FR)
(74) Mandataire: Santarelli

(56) Documents cités:
- EP-A1- 2 184 545
- FR-A- 498 715
- GB-A- 174 759
- GB-A- 177 389
- GB-A- 396 189
- GB-A- 2 084 716
- US-A- 993 241
- US-A- 1 168 857
- US-A- 1 239 341
- US-A- 2 086 223
- US-A- 2 323 821

## Description

La présente invention concerne un appareil de cuisson à gaz, et plus particulièrement un four à gaz.

L'invention concerne de manière générale un appareil de cuisson pour cuire des aliments, destiné à un usage domestique ou un usage professionnel.

Un tel appareil de cuisson comprend une enceinte de cuisson comportant de manière connue une sole en partie inférieure et une voûte en partie supérieure.

Un appareil de cuisson à gaz est équipé d'un brûleur à gaz disposé sous la sole de l'enceinte de cuisson afin d'obtenir une montée en température dans cette enceinte de cuisson, et cuire des aliments placés dans cette enceinte de cuisson chauffée.

On connaît des fours de cuisson à gaz, comme décrit dans le document FR 0 509 704, dans lesquels une circulation de gaz chaud provenant d'une rampe à gaz est mise en oeuvre afin de cuire les aliments par convection et par rayonnement.

La circulation des gaz brûlés provenant de la rampe à gaz est réalisée au travers d'une double paroi formant l'enceinte de cuisson.

L'enceinte de cuisson comporte ainsi, au niveau de ses parois latérales, une double paroi débouchant en partie basse sous la sole de l'enceinte de cuisson, où est placée la rampe à gaz.

Les gaz brûlés provenant de la rampe à gaz montent le long de l'espace aménagé entre la double paroi de l'enceinte de cuisson et débouchent dans l'enceinte de cuisson, par des ouvertures prévues dans les parois latérales, en partie haute, à proximité de la voûte.

La voûte guide le flux de gaz brûlés pénétrant à l'intérieur de l'enceinte de cuisson et redirige ce flux de gaz brûlés dans un mouvement descendant, en partie basse de l'enceinte de cuisson afin de cuire les aliments notamment par convection.

La circulation des gaz brûlés permet d'obtenir une cuisson régulière et homogène des aliments, sans dessèchement du fait de la vapeur d'eau contenue dans les gaz brûlés.

Ce four de cuisson à gaz nécessite toutefois la création d'une double paroi pour permettre la circulation des gaz et la cuisson par convection des aliments.

On connaît également un four de cuisson à gaz décrit dans le document US 2 323 821 A, comprenant une sole, une voûte, et un brûleur à gaz disposé sous la sole de l'enceinte de cuisson, la sole comportant une ouverture en vis-à-vis dudit brûleur à gaz et l'appareil de cuisson comprenant une plaque disposée dans l'enceinte de cuisson, au-dessus dudit brûleur à gaz.

D'autres fours de cuisson à gaz sont connus des documents US 1 239 341 A, US 2 086 223 A et EP 2 184 545 A1.

La présente invention a pour but d'améliorer un tel appareil de cuisson et propose un appareil de cuisson à gaz présentant un meilleur rendement énergétique.

A cet effet, l'invention concerne un appareil de cuisson selon la revendication 1.

La structure particulière de l'enceinte de cuisson, ainsi équipée d'un brûleur à gaz apparent grâce à une ouverture prévue à cet effet dans la sole et d'une plaque, permet de créer une circulation des gaz brûlés provenant du brûleur à gaz directement à l'intérieur de l'enceinte de cuisson, sans requérir la création d'une double paroi de circulation des gaz brûlés.

Outre, la simplification de construction de l'enceinte de cuisson, l'efficacité énergétique est améliorée grâce à la circulation directe des gaz brûlés à l'intérieur de l'enceinte de cuisson, sans déperdition énergétique au niveau de la double paroi connue de l'art antérieur.

L'utilisation directe des gaz brûlés provenant du brûleur à gaz permet d'obtenir un meilleur rendement énergétique et de diminuer ainsi la consommation énergétique de l'appareil de cuisson pour une performance de cuisson similaire.

Un tel appareil de cuisson permet d'obtenir un chauffage et une cuisson homogène des aliments à la fois par radiation et convection.

Le contact direct entre les aliments et les gaz brûlés chargés en vapeur d'eau permet de limiter l'évaporation lors de la cuisson des aliments et ainsi de diminuer la perte de poids de l'aliment en cours de cuisson.

Selon une caractéristique, l'enceinte de cuisson comporte deux parois latérales, les deux échancrures formant respectivement deux passages de circulation des gaz brûlés débouchant entre la plaque et la sole respectivement en regard des parois latérales de l'enceinte de cuisson.

Les deux passages de circulation des gaz brûlés formés par les échancrures débouchent ainsi de manière opposée dans l'enceinte de cuisson, les gaz brûlés étant guidés par les parois latérales de l'enceinte de cuisson jusqu'à la voûte.

Avantageusement, l'enceinte de cuisson comporte une voûte courbe, la courbure de la voûte s'étendant d'une paroi latérale à l'autre paroi latérale.

La forme courbe de la voûte favorise l'orientation des gaz brûlés dans l'enceinte de cuisson et leur mouvement en tourbillons dans l'enceinte de cuisson.

Selon un mode de réalisation avantageux, la plaque a une paroi de fond en regard du brûleur à gaz, la paroi de fond étant chanfreinée de sorte que la distance entre une partie centrale de la paroi de fond et le plan de la sole est inférieure à la distance entre une zone de la paroi de fond à proximité des échancrures et le plan de la sole.

Cette forme chanfreinée de la paroi de fond permet de guider le flux de gaz brûlés en sortie du brûleur à gaz jusqu'aux échancrures du rebord périphérique de la plaque.

Dans un mode de réalisation de l'appareil de cuisson, la plaque est réalisée en fonte, et de préférence en fonte émaillée.

La plaque présente ainsi une inertie thermique importante. Une telle plaque est particulièrement adaptée à constituer à l'intérieur de l'enceinte de cuisson un foyer sur lequel peut être posé directement un plat contenant les aliments à cuire.

Dans ce cas, l'appareil de cuisson combine avantageusement un chauffage par conduction des aliments, au chauffage par radiation et convection décrit précédemment.

Un tel appareil de cuisson permet notamment la cuisson lente ou par mijotage des aliments.

Grâce aux gaz brûlés provenant du brûleur à gaz et s'échappant par l'ouverture de la sole de l'enceinte de cuisson autour de la plaque, on obtient un chauffage homogène des aliments placés dans un récipient directement sur la plaque, grâce à la circulation des gaz brûlés dans l'espace tout autour de cette plaque.

Ainsi, selon un second aspect, l'invention concerne l'utilisation d'un appareil de cuisson tel que décrit précédemment, un récipient de cuisson étant placé en contact sur la plaque.

D'autres particularités et avantages de l'invention apparaîtront encore dans la description ci-après.

Aux dessins annexés, donnés à titre d'exemples non limitatifs :
- la figure 1 est une vue en perspective schématique d'un appareil de cuisson selon un mode de réalisation de l'invention ;
- la figure 2 est une vue en perspective d'un exemple de plaque mise en oeuvre dans l'appareil de cuisson de la figure 1 ;
- la figure 3 est une vue de côté de la plaque de la figure 2 ; et
- la figure 4 est une vue en coupe selon la ligne IV-IV à la figure 3 ;
- la figure 4A est un détail agrandi de la figure 4 ;
- la figure 5 est une vue de dessous de la plaque de la figure 2 ; et
- la figure 6 est un schéma explicatif du positionnement relatif des composants d'un appareil de cuisson selon un exemple non-limitatif de réalisation.

On va décrire tout d'abord un exemple de réalisation d'un appareil de cuisson à gaz.

Un tel appareil de cuisson peut être un four à gaz, domestique ou à usage professionnel, pour la cuisson et/ou le chauffage des aliments.

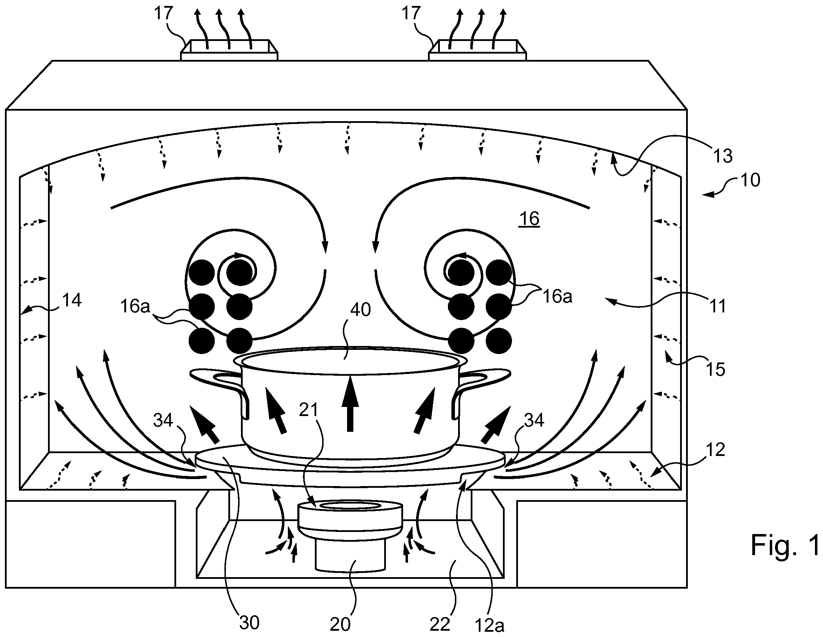

Comme illustré à la figure 1, l'appareil de cuisson 10 comprend une enceinte de cuisson 11 destinée à recevoir les aliments à cuire et/ou à chauffer.

De manière connue, les aliments sont placés par exemple dans un plat, posé sur une grille ou une plaque maintenue dans l'enceinte de cuisson au moyen de gradins (non représentés) de l'enceinte de cuisson.

L'enceinte de cuisson 11 comporte une sole 12 en partie inférieure et une voûte 13 en partie supérieure.

L'enceinte de cuisson 11 comporte deux parois latérales 14, 15, la voûte 13 s'étendant entre les deux parois latérales 14, 15.

Ici, et de manière non limitative, la voûte 13 est courbe, présentant ainsi une forme concave dirigée vers l'intérieur de l'enceinte de cuisson 11.

La voûte présente ainsi une courbure dans le plan vertical perpendiculaire aux parois latérales 14, 15. La courbure de la voute 13 est en arc de cercle. Elle s'étend d'une paroi latérale 14 à l'autre paroi latérale 15.

L'enceinte de cuisson 11 comporte également une paroi de fond 16 opposée de manière connue à une ouverture d'introduction des aliments, fermée par une porte (non représentée à la figure 1).

L'appareil de cuisson 10 comprend également un brûleur à gaz 20 disposé sous la sole 12 de l'enceinte de cuisson 11.

Dans ce mode de réalisation et de manière nullement limitative, le brûleur à gaz 20 est un brûleur circulaire, équipé d'une couronne.

A titre d'exemple, le diamètre de la couronne 21 du brûleur à gaz 20 peut être sensiblement égal à 80 cm.

Comme bien illustré à la figure 1, le brûleur à gaz 20 est disposé dans une partie inférieure 22 de la carrosserie de l'appareil de cuisson, sous la sole 12 de l'enceinte de cuisson 11.

L'appareil de cuisson comporte bien entendu des éléments bien connus de l'homme du métier pour alimenter en gaz le brûleur à gaz 20. Ces éléments ne sont pas illustrés à la figure 1 et n'ont pas besoin d'être décrits ici en relation avec l'invention.

La sole 12 comporte une ouverture 12a en vis-à-vis du brûleur à gaz.

L'ouverture 12a est réalisée par exemple par une découpe d'une tôle métallique formant la sole 12.

Dans ce mode de réalisation, et à titre non limitatif, l'ouverture 12a de la sole 12 a une forme circulaire.

Cette ouverture 12a est disposée sensiblement au centre de la sole 12 et ainsi de l'enceinte de cuisson 11.

Dans le cas où le brûleur à gaz 20 comme décrit précédemment a également une forme circulaire, le diamètre de l'ouverture 12a de la sole est supérieur au diamètre de la couronne 21 du brûleur à gaz 20.

Dans l'exemple décrit précédemment, et de manière non limitative, l'ouverture 12a de la sole 12 a un diamètre sensiblement égal à 250 mm.

Le brûleur 20 est ainsi apparent et visible au travers de l'ouverture 12a de la sole 12 dans l'enceinte de cuisson 11.

L'appareil de cuisson 10 comprend en outre une plaque 30 disposée dans l'enceinte de cuisson 11, au-dessus du brûleur à gaz 20.

Dans le mode de réalisation illustré à la figure 1, la plaque 30 a une forme circulaire et s'étend coaxialement avec l'ouverture 12a de la sole 12 et le brûleur à gaz 20.

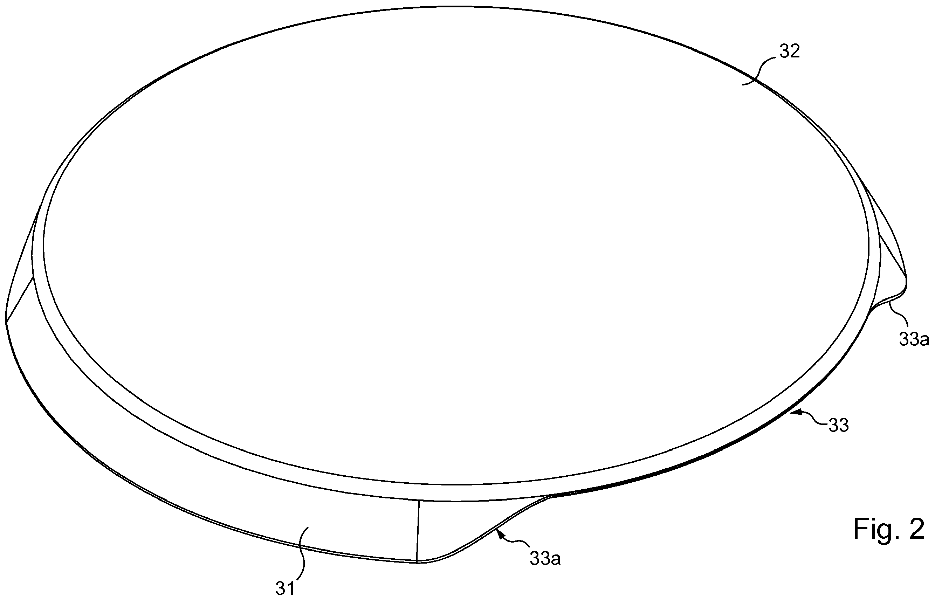

La plaque 30 est illustrée plus en détail aux figures 2 à 5.

Dans ce mode de réalisation, la plaque 30 comprend une portion sensiblement plane 32 munie d'un rebord périphérique 31. Le rebord périphérique 31 s'étend par exemple sensiblement perpendiculairement ou dans un plan incliné par rapport à la portion sensiblement plane 32.

Comme bien illustré à la figure 1, le rebord périphérique 31 s'étend en direction de la sole 12 de l'enceinte de cuisson 11.

Dans un mode de réalisation pratique de l'invention, la plaque 30 a un diamètre supérieur au diamètre de l'ouverture 12a de la sole 12.

A titre d'exemple, le diamètre de la plaque 30 est d'environ 290 mm.

La plaque 30 est positionnée ainsi au-dessus de l'ouverture 12a de la sole 12 de manière à aménager un espace entre la plaque 30 et la sole 12 pour créer un passage de circulation des gaz brûlés provenant du brûleur à gaz 20.

A titre d'exemple non limitatif, le positionnement de la plaque 30 sur la sole 12 est réalisé par l'intermédiaire de plots de positionnement.

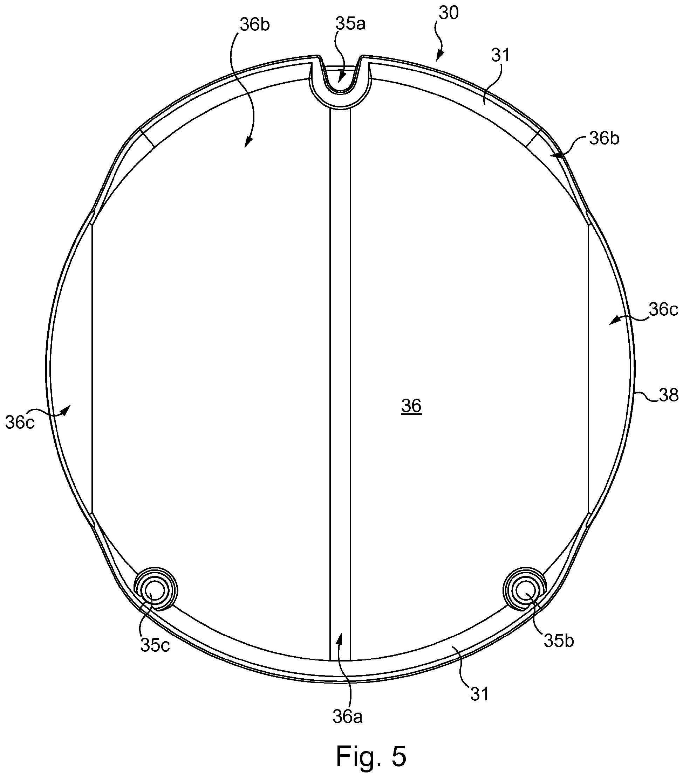

Comme bien illustré à la figure 5, la plaque 30 comporte trois logements 35a, 35b, 35c adaptés à coopérer pour loger des plots de positionnement (non représentés) prévus à cet effet sur la sole 12 de l'enceinte de cuisson 10.

L'utilisation de plots de positionnement permet d'indexer de manière fiable l'orientation de la plaque 30 dans l'enceinte de cuisson 10.

L'utilisation de trois plots de positionnement permet un positionnement stable et une indexation unique de la plaque 30 sur la sole 12 de l'enceinte de cuisson.

Comme cela apparaitra dans la suite de la description, ce positionnement unique de la plaque 30 dans l'enceinte de cuisson 10 favorise la circulation des gaz brûlés provenant du brûleur à gaz au travers du passage réalisé entre la plaque 30 et la sole 12.

Dans ce mode de réalisation et de manière non limitative, un premier logement 35a est prévu sur un bord de la plaque 30 destiné à être positionné vers l'arrière de la sole 12, à proximité de la paroi de fond 16 de l'enceinte de cuisson 10.

Le premier logement 35a présente une forme semi-cylindrique ouverte sur l'extérieur de la plaque 30 afin de permettre le positionnement de la plaque et une légère rotation de la plaque 30 autour d'un premier plot de positionnement adapté à être logé dans le premier logement 35a.

Grâce au pivotement obtenu en ce point, la plaque 30 peut être positionnée sans difficulté pour mettre en regard les deux autres logements 35b, 35c avec deux autres plots de positionnement prévus à cet effet vers l'avant de la sole 12 de l'enceinte de cuisson 10, c'est-à-dire à proximité de l'ouverture et de la porte du four.

Le positionnement de la plaque 30 au-dessus de la sole 12 et le maintien de cette plaque 30 au-dessus de la sole 12 grâce à des plots de positionnement permet de laisser libre un espace entre la plaque 30 et la sole 12 pour la circulation des gaz brûlés provenant du brûleur à gaz 20.

Comme bien illustré aux figures 2 à 5, le rebord périphérique 31 comporte deux échancrures 33.

Les deux échancrures 33 forment ainsi respectivement deux passages 34 de circulation des gaz brûlés.

Le rebord périphérique 31 de la plaque 30 est de préférence chanfreiné aux extrémités 33a des échancrures 33.

Les échancrures 33 sont ainsi reliées à leur extrémité 33a par un bord biseauté au rebord périphérique 31.

Ces chanfreins réalisés aux extrémités 33a des échancrures 33 permettent d'éviter la présence d'arêtes vives au niveau du rebord périphérique 31 et facilitent la réalisation par fonderie de la plaque 30.

Dans le mode de réalisation illustré aux figures 2 à 5, la plaque 30 comprend des échancrures 33 s'étendant chacune sensiblement sur un quart du périmètre du rebord périphérique 31.

Comme bien illustré à la figure 5, la plaque 30 a une paroi de fond 36 destinée à être disposée en regard du brûleur à gaz 20.

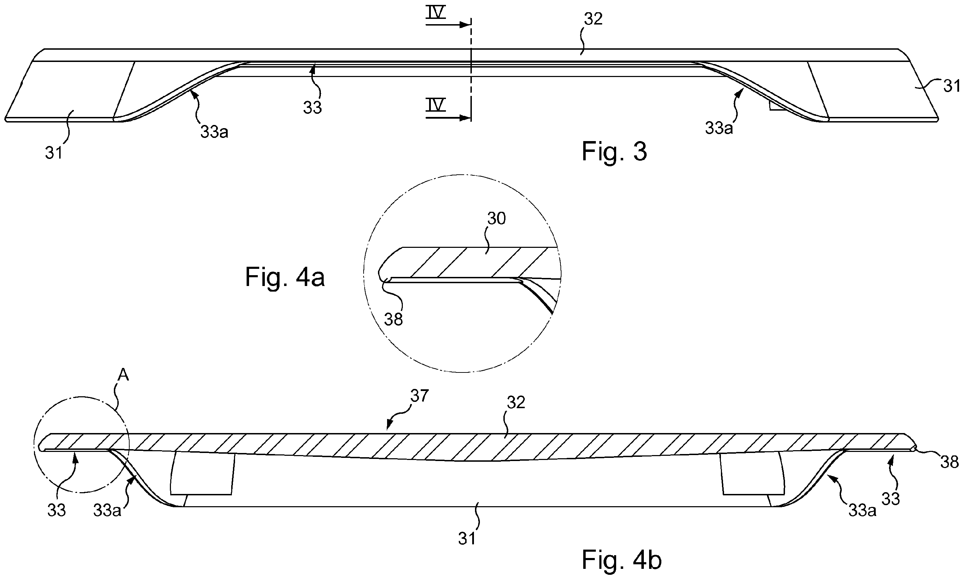

Comme visible aux figures 4 et 5, la paroi de fond 36 est chanfreinée.

Plus particulièrement, la paroi de fond 36 comporte une partie centrale 36a s'étendant sensiblement le long d'un diamètre de la plaque 30 et formant une partie plane, sensiblement parallèle à une paroi plane externe 37 de la plaque 30. La partie centrale 36a s'étend entre le rebord périphérique 31 de la plaque 30 et le premier logement 35a décrit précédemment.

A partir de cette partie centrale 36a, la paroi de fond 36 présente deux parties chanfreinées 36b formant ainsi deux plans inclinés par rapport au plan de la paroi plane externe 37 de la plaque 30.

Les parties chanfreinées 36b s'étendent ainsi en direction du bord périphérique 31 muni des échancrures 33.

Au niveau de ces échancrures 33, les deux parties chanfreinées 36b se raccordent respectivement à deux portions planes de bord s'étendant le long du bord de la plaque 30, dans une zone 36c de la paroi de fond 36 proche des échancrures 33 du rebord périphérique 31.

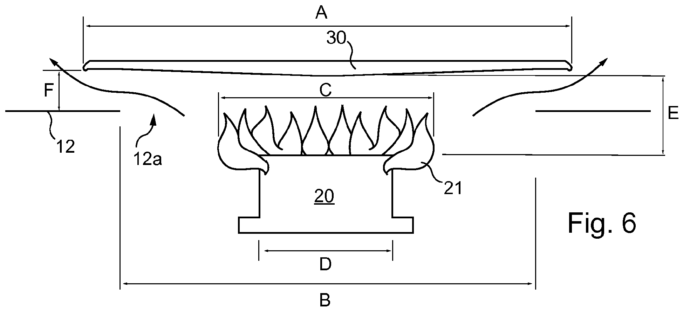

Ainsi, comme illustré à la figure 6, la distance entre la partie centrale 36a de la paroi de fond 36 et le plan de la sole 12 est inférieure à la distance entre le plan de la sole 12 et la zone de la paroi de fond 36 à proximité des échancrures 33.

Comme bien illustré à la figure 1, les passages 34 de circulation de gaz brûlés formés par les échancrures 33 débouchent entre la plaque 30 et la sole 12 respectivement en regard des parois latérales 14, 15 de l'enceinte de cuisson 11.

Ainsi, dans le mode de réalisation décrit ici, la portion sensiblement plane 32 de la plaque 30 s'étend en vis-à-vis du brûleur à gaz 20 et le rebord périphérique 31 s'étend en direction de la sole 12 de l'enceinte de cuisson 11, la partie centrale 36a de la paroi de fond étant disposée sensiblement parallèle aux parois latérales 14, 15.

Dans cette position, les deux échancrures 33 forment respectivement deux passages 34 de circulation des gaz brûlés débouchant chacun en regard des parois latérales 14, 15 de l'enceinte de cuisson 11.

Comme bien illustré à la figure 4A, le bord de la plaque 30 présente au niveau des échancrures 33 un renflement 38 formant une saillie sur la paroi de fond 36 de la plaque 30.

Le renflement 38 sur le bord de la plaque 30 joue le rôle de brise-goutte et permet d'éviter que des liquides présents sur la face supérieure 37 de la plaque 30 s'écoulent le long de la paroi de fond 36 et tombent sur le brûleur à gaz 20.

La paroi de fond 16, qui s'étend entre la sole 12 et la voûte 13 de l'enceinte de cuisson 11 comprend des orifices 16a constituant des orifices de sortie des gaz brûlés de l'enceinte de cuisson 11.

Dans ce mode de réalisation, et de manière non limitative, la paroi de fond 16 comporte deux séries d'orifices 16a, chaque série débouchant dans une conduite formant cheminée 17 s'étendant derrière la paroi de fond 16 de l'enceinte de cuisson 11, et donc à l'arrière de l'appareil de cuisson 10.

On va décrire à présent en référence à la figure 6 un exemple de positionnement relatif des différents composants dans l'enceinte de cuisson 10.

Dans ce mode de réalisation, le brûleur à gaz est un brûleur couronne, de diamètre D par exemple égal à 80 mm.

Ce brûleur à gaz 20 présente ainsi une couronne de flammes dont le diamètre C dépend de la puissance assignée.

Comme indiqué précédemment, l'ouverture 12a de la sole 12 présente un diamètre B supérieur au diamètre D de la couronne 21 du brûleur à gaz 20.

De préférence, le diamètre B de l'ouverture 12a doit également être supérieur au diamètre C de la couronne de flammes afin de protéger la sole 12 de la surchauffe et d'un contact direct avec la flamme, quelle que soit la puissance assignée au brûleur à gaz 20.

Ainsi, le diamètre B de l'ouverture 12a de la sole 12 est par exemple sensiblement égal à deux fois le diamètre C de la couronne de flammes maximale.

A titre d'exemple non limitatif, le diamètre B de l'ouverture 12a de la sole 12 peut être compris entre 200 et 300 mm.

Par ailleurs, le diamètre A de la plaque 30 est supérieur au diamètre B de l'ouverture 12a de la sole 12.

Le diamètre A de la plaque 30 peut ainsi être compris entre 250 et 350 mm.

Comme bien illustré à la figure 6, le positionnement de la plaque 30 au-dessus de la sole 12 et du brûleur à gaz 20 est réalisé de telle sorte qu'une distance E est aménagée entre la couronne 21 du brûleur à gaz 20 et la plaque 30 et une distance F est aménagée entre le plan de la sole 12 et la plaque 30.

La distance E entre la couronne 21 du brûleur à gaz 20 et la plaque 30 dépend de la distance requise par construction, afin d'obtenir une bonne combustion.

En fonction du débit des gaz brûlés, selon la puissance assignée au brûleur à gaz 20, la distance E doit être suffisante pour éviter toute recirculation des gaz brûlés en direction du brûleur à gaz 20.

A titre d'exemple non limitatif, la distance E est par exemple supérieure ou égale à 40 mm.

La distance F mesurée plus précisément entre le plan de la sole 12 et la zone 36c de paroi de fond 36 au niveau des échancrures 33 doit être suffisante pour permettre la circulation des gaz brûlés illustrée par une flèche à la figure 6.

Compte tenu de la direction des flammes en sortie de la couronne 21 du brûleur 20, formant ainsi un angle par rapport à la plaque 30, les gaz brûlés sont orientés dans une direction inclinée par rapport à la plaque 30 et non directement perpendiculaire à la plaque 30.

On évite ainsi le choc perpendiculaire des gaz brûlés sur la paroi de fond 36 de la plaque 30, ce qui pourrait nuire à la combustion.

Une énergie calorifique importante serait alors consommée par la plaque 30 au détriment de la circulation des gaz brûlés dans l'enceinte de cuisson 10.

Ici, et uniquement à titre d'exemple, la chaleur émise par le brûleur à gaz 20 est consommée à environ 90 % pour chauffer l'enceinte de cuisson et environ à 10 % pour chauffer la plaque 30.

La forme chanfreinée de la paroi de fond 36 de la plaque 30 permet un lissage et la continuité dans l'orientation des gaz brûlés s'échappant principalement par les échancrures 33 du rebord périphérique 31 de la plaque 30.

A titre d'exemple non limitatif, la distance F entre la zone 36c de paroi de fond 36 au niveau des échancrures 33 et le plan de la sole 12 est de l'ordre de 25 mm.

Par ailleurs, la distance entre le plan de la sole 12 et le rebord périphérique 31 de la plaque 30, en dehors des parties portant les échancrures 33, est de l'ordre de 5 mm permettant de créer un passage de circulation des gaz brûlés tout autour de la plaque 30.

On va décrire à présent en référence à la figure 1 le fonctionnement de l'appareil de cuisson 10, et notamment la circulation des gaz brûlés provenant du brûleur à gaz 20 pendant la cuisson des aliments.

Comme bien illustré par les flèches en trait fin, les gaz brûlés, correspondant principalement aux gaz brûlés s'échappant du brûleur à gaz 20, traversent le passage 34 au niveau de l'espace formé entre la plaque 30 et la sole 12 de l'enceinte de cuisson 11.

On notera que les gaz brûlés s'échappent tout autour de la plaque 30 dans l'espace aménagé entre la plaque 30 et la sole 12, bien qu'une circulation préférentielle soit réalisée au niveau des échancrures 33 du rebord périphérique 31 de la plaque 30.

Les gaz brûlés s'élèvent sous l'effet de la chaleur contre les parois latérales 14, 15 en direction de la voûte 13 de l'enceinte de cuisson 11.

La forme courbe de la voûte 13 guide les gaz brûlés de manière à diriger le flux de gaz brûlés selon un mouvement descendant au centre de l'enceinte de cuisson 11, en direction des aliments placés dans l'enceinte de cuisson 11.

La forme courbe de la voûte 13 permet ainsi de favoriser la circulation des gaz brûlés dans l'enceinte de cuisson 10.

Plus particulièrement, les gaz brûlés s'échappent principalement de manière symétrique à partir des passages 34 formés par les échancrures 33 du rebord périphérique 31 de la plaque 30 le long des parois latérales 14, 15 et se rencontrent au point central de la voute 13.

Ces gaz sont ainsi forcés, en tourbillonnant, à redescendre en direction des aliments placés dans le centre de l'enceinte de cuisson 10, et par exemple sur une grille (non représentée) glissée dans des gradins de l'enceinte de cuisson 11.

Les gaz brûlés circulent ainsi autour des aliments, en tourbillonnant jusqu'à leur évacuation par les orifices de sortie 16a prévus dans la paroi de fond 16 de l'enceinte de cuisson 11 et leur extraction de l'appareil de cuisson 10 par les cheminées 17.

L'appareil de cuisson 10 ainsi décrit permet de favoriser une circulation des gaz brûlés à l'intérieur de l'enceinte de cuisson 11, et d'obtenir ainsi une cuisson homogène des aliments par convection.

La circulation des gaz brûlés dans l'enceinte de cuisson 11 permet également une montée en température des parois de l'enceinte de cuisson, c'est-à-dire de la sole 12, de la voûte 13, des parois latérales 14, 15 et de la paroi de fond 16.

Ces parois chauffées émettent ainsi de la chaleur par radiation (schématisée par les flèches en pointillé) en direction des aliments à cuire.

La cuisson des aliments est ainsi obtenue avantageusement en combinant à la fois un chauffage par radiation et un chauffage par convection.

L'utilisation directe des gaz brûlés dans l'enceinte de cuisson permet d'obtenir un bon rendement énergétique de l'appareil de cuisson.

La plaque 30 peut en outre avantageusement être réalisée en fonte, et par exemple en fonte émaillée.

Dans un tel mode de réalisation, les aliments à cuire peuvent être contenus dans un plat ou récipient de cuisson 40 placé directement en contact sur la plaque 30.

La plaque 30 joue ainsi le rôle d'une plaque coupe-feu traditionnellement utilisée dans des fourneaux à gaz et constitue un foyer de cuisson à l'intérieur même de l'enceinte de cuisson 11 de l'appareil de cuisson 10.

Comme bien illustré par les flèches en trait épais, les aliments peuvent cuire ainsi également par conduction, par la chaleur transmise par la plaque en contact direct avec les flammes du brûleur à gaz 20.

L'utilisation d'une plaque 30 en fonte, présentant une grande inertie thermique, permet également d'éviter une chute importante de la température dans l'enceinte de cuisson 11 lors de l'ouverture de la porte de l'appareil de cuisson 10.

L'utilisation d'une plaque 30 en fonte, du fait de l'inertie thermique de ce matériau, permet d'obtenir une montée en température de la plaque 30 simultanément à la montée en température de l'enceinte de cuisson 11.

La fonte émaillée permet en outre une meilleure résistance de la plaque 30 aux chocs et salissures, notamment lorsque la plaque 30 est destinée à recevoir directement un récipient pour la cuisson des aliments.

Dans un tel appareil de cuisson avec une plaque 30 en fonte, la cuisson des aliments combine avantageusement une cuisson par conduction, radiation et convection.

Bien entendu, l'invention n'est pas limitée aux exemples de réalisation décrits précédemment.

En particulier, la forme de l'ouverture, du brûleur à gaz et de la plaque peut ne pas être circulaire. Le brûleur à gaz peut être composé d'une rampe rectiligne par exemple.

Par ailleurs, la plaque 30 peut être réalisée dans d'autres types de matériau tels qu'en aluminium ou en acier.

En outre, la forme de l'enceinte de cuisson 11 peut être différente, et notamment la voute 13 de l'appareil de cuisson peut être plane.

L'appareil de cuisson décrit précédemment permet ainsi de réaliser un four à gaz présentant un rendement et une efficacité énergétique améliorés.

## Revendications

1. Appareil de cuisson comprenant une enceinte de cuisson (11), l'enceinte de cuisson (11) comportant une sole (12) et un brûleur à gaz (20) disposé sous la sole (12) de l'enceinte de cuisson (11), la sole (12) comportant une ouverture (12a) en vis-à-vis dudit brûleur à gaz (20) et l'appareil de cuisson (10) comprenant une plaque (30) disposée dans l'enceinte de cuisson (11), au-dessus dudit brûleur à gaz (20), et un espace entre la plaque (30) et la sole (12) formant un passage (34) de circulation des gaz brûlés provenant du brûleur à gaz (20), ledit espace étant aménagé tout autour de la plaque (30), et ladite plaque (30) comprenant un rebord périphérique (31) s'étendant en direction de la sole (12) de l'enceinte de cuisson (11), **caractérisé en ce que** l'enceinte de cuisson comporte en outre une voûte (13) et **en ce que** ledit rebord périphérique (31) comporte deux échancrures (33) formant respectivement deux passages (34) de circulation préférentielle des gaz brûlés.

2. Appareil de cuisson conforme à la revendication 1, **caractérisé en ce que** l'enceinte de cuisson (11)comporte deux parois latérales (14, 15), lesdites deux échancrures formant respectivement deux passages (34) de circulation préférentielle des gaz brûlés débouchant entre la plaque (30) et la sole (12) respectivement en regard des parois latérales (14, 15) de l'enceinte de cuisson (11).

3. Appareil de cuisson conforme à la revendication 3, **caractérisé en ce que** l'enceinte de cuisson (11) comporte une voûte courbe, la courbure de la voute s'étendant d'une desdites deux parois latérales (14, 15) à l'autre desdites deux parois latérales (14, 15).

4. Appareil de cuisson conforme à l'une des revendications 1 à 3, **caractérisé en ce que** la plaque (30) a une paroi de fond (36) en regard dudit brûleur à gaz (20), la paroi de fond (36) de la plaque (30) étant chanfreinée de sorte que la distance entre une partie centrale (36a) de la paroi de fond (36) de la plaque (30) et le plan de la sole (12) est inférieure à la distance entre une zone (36c) de la paroi de fond (36) de la plaque (30) à proximité des échancrures (33) et le plan de la sole (12).

5. Appareil de cuisson conforme à l'une des revendications 1 à 4, **caractérisé en ce que** ladite plaque (30) a une forme circulaire.

6. Appareil de cuisson conforme à la revendication 5, **caractérisé en ce que** l'ouverture (12a) de ladite sole (12) a une forme circulaire, de diamètre supérieur au diamètre d'une couronne (21) du brûleur à gaz (20) et inférieur au diamètre de la plaque (30).

7. Appareil de cuisson conforme à l'une des revendications 1 à 6, **caractérisé en ce que** la plaque (30) est réalisée en fonte, et de préférence en fonte émaillée.

8. Appareil de cuisson conforme à l'une des revendications 1 à 7, **caractérisé en ce que** l'enceinte de cuisson (11) comporte une paroi de fond (16) s'étendant entre la sole (12) et la voûte (13), ladite paroi de fond (16) de l'enceinte de cuisson (11) comprenant des orifices de sortie (16a) des gaz brûlés de l'enceinte de cuisson (11).

9. Utilisation d'un appareil de cuisson conforme à l'une des revendications 1 à 8, **caractérisé en ce qu'**un récipient de cuisson (40) est placé en contact sur ladite plaque (30).

## Patentansprüche

1. Kochgerät, enthaltend einen Garraum (11), wobei der Garraum (11) einen Boden (12) und einen Gasbrenner (20) enthält, der unter dem Boden (12) des Garraums (11) angeordnet ist, wobei der Boden (12) eine Öffnung (12a) gegenüber dem Gasbrenner (20) aufweist und das Kochgerät (10) eine Platte (30) enthält, die in dem Garraum (11) oberhalb des Gasbrenners (20) angeordnet ist, sowie einen Freiraum zwischen der Platte (30) und dem Boden (12), der einen Durchtritt (34) zur Zirkulation der vom Gasbrenner (20) stammenden Verbrennungsgase bildet, wobei der Freiraum um die Platte (30) herum ausgebildet ist und wobei die Platte (30) eine umlaufende Randleiste (31) enthält, die sich in Richtung Boden (12) des Garraums (11) erstreckt, **dadurch gekennzeichnet, dass** der Garraum ferner eine Decke (13) aufweist und dass die umlaufende Randleiste (31) zwei Aussparungen (33) aufweist, die zwei jeweilige Zirkulationsdurchtritte (34) zur bevorzugten Zirkulation von Verbrennungsgasen bilden.

2. Kochgerät nach Anspruch 1, **dadurch gekennzeichnet, dass** der Garraum (11) zwei Seitenwände (14, 15) aufweist, wobei die beiden Aussparungen, die zwei jeweilige Zirkulationsdurchtritte (34) zum bevorzugten Strömen von Verbrennungsgasen bilden, zwischen der Platte (30) und dem Boden (12) jeweils den Seitenwänden (14, 15) des Garraums (11) gegenüberliegend ausmünden.

3. Kochgerät nach Anspruch 2, **dadurch gekennzeichnet, dass** der Garraum (11) eine gekrümmte Decke enthält, wobei die Krümmung der Decke sich von einer der beiden Seitenwände (14, 15) zur anderen der beiden Seitenwände (14, 15) erstreckt.

4. Kochgerät nach einem der Ansprüche 1 bis 3, **dadurch gekennzeichnet, dass** die Platte (30) eine Bodenwand (36) gegenüber dem Gasbrenner (20) aufweist, wobei die Bodenwand (36) der Platte (30) abgeschrägt ausgeführt ist, so dass der Abstand zwischen einem Mittelteil (36a) der Bodenwand (36) der Platte (30) und der Ebene des Bodens (12) geringer ist als der Abstand zwischen einem Bereich (36c) der Bodenwand (36) der Platte (30) in der Nähe der Aussparungen (33) und der Ebene des Bodens (12).

5. Kochgerät nach einem der Ansprüche 1 bis 4, **dadurch gekennzeichnet, dass** die Platte (30) eine Kreisform hat.

6. Kochgerät nach Anspruch 5, **dadurch gekennzeichnet, dass** die Öffnung (12a) des Bodens (12) eine Kreisform mit einem Durchmesser hat, der größer als der Durchmesser von einem Kranz (21) des Gasbrenners (20) und kleiner als der Durchmesser der Platte (30) ist.

7. Kochgerät nach einem der Ansprüche 1 bis 6, **dadurch gekennzeichnet, dass** die Platte (30) aus Gusseisen und vorzugsweise aus emailliertem Gusseisen hergestellt ist.

8. Kochgerät nach einem der Ansprüche 1 bis 7, **dadurch gekennzeichnet, dass** der Garraum (11) eine Rückwand (16) enthält, die sich zwischen dem Boden (12) und der Decke (13) erstreckt, wobei die Rückwand (16) des Garraums (11) Austrittsöffnungen (16a) zum Austritt der Verbrennungsgase aus dem Garraum (11) enthält.

9. Verwendung eines Kochgeräts nach einem der Ansprüche 1 bis 8, **dadurch gekennzeichnet, dass** ein Kochgefäß (40) auf die Platte (30) in Kontakt mit dieser gestellt wird.

## Claims

1. A cooking appliance comprising a cooking chamber (11), the cooking chamber (11) comprising a bottom wall (12) and a gas burner (20) disposed under the bottom wall (12) of the cooking chamber (11), the bottom wall (12) comprising an opening (12a) opposite said gas burner (20) and the cooking appliance (10) comprising a plate (30) disposed in the cooking chamber (11), above said gas burner (20), and a space between the plate (30) and the bottom wall (12) forming a flow passage (34) for the burnt gases coming from the gas burner (20), said space being located all around the plate (30) and said plate (30) comprising a peripheral rim (31) extending towards the bottom wall (12) of the cooking chamber (11), **characterized in that** the cooking chamber comprises also a top wall (13) and **in that** said peripheral rim (31) comprises two cut-outs (33) respectively forming two preferential flow passages (34) for the burnt gases.

2. A cooking appliance according to claim 1, **characterized in that** the cooking chamber (11) comprises two side walls (14, 15), said two cut-outs respectively forming two preferential flow passages (34) for the burnt gases opening between the plate (30) and the bottom wall (12) respectively facing the side walls (14, 15) of the cooking chamber (11).

3. A cooking appliance according to claim 2, **characterized in that** the cooking chamber (11) comprises a curved top wall, the curvature of the top wall extending from one of said two side walls (14, 15) to the other of said two side walls (14, 15).

4. A cooking appliance according to one of claims 1 to 3, **characterized in that** the plate (30) has a back wall (36) facing said gas burner (20), the back wall (36) of the plate (30) being chamfered such that the distance between a central part (36a) of the back wall (36) of the plate (30) and the plane of the bottom wall (12) is less than the distance between a zone (36c) of the back wall (36) of the plate (30) near the cut-outs (33) and the plane of the bottom wall (12).

5. A cooking appliance according to one of claims 1 to 4, **characterized in that** said plate (30) is of circular shape.

6. A cooking appliance according to claim 5, **characterized in that** the opening (12a) of said bottom wall (12) is of circular shape, of diameter greater than the diameter of the ring (21) of the gas burner (20) and less than the diameter of the plate (30).

7. A cooking appliance according to one of claims 1 to 6, **characterized in that** the plate (30) is produced from cast iron, preferably enameled cast iron.

8. A cooking appliance according to one of claims 1 to 7, **characterized in that** the cooking chamber (11) comprises a back wall (16) extending between the bottom wall (12) and the top wall (13), said back wall (16) of the cooking chamber (11) comprising outlet apertures (16a) for the burnt gases from the cooking chamber (11).

9. Use of a cooking appliance according to one of claims 1 to 8, **characterized in that** a cooking receptacle (40) is placed on said plate (30) in contact therewith.
